# EUROPÄISCHE PATENTANMELDUNG

(11) **EP 0 606 537 A1**
(43) Veröffentlichungstag der Anmeldung: **20.07.1994**
(21) Anmeldenummer: 93116310.9
(22) Anmeldetag: 08.10.1993
(51) Int. Cl.: G02B 6/28

(54) **Schutzhülle für einen Monomode-Richtkoppler**

(30) Priorität: 13.01.1993 DE 4300593
(71) Anmelder: Daimler-Benz Aerospace Aktiengesellschaft, D-81663 München (DE)
(72) Erfinder: Hartl, Engelbert, Dr., D-81669 München (DE); Trommer, Gert, Dr., D-80809 München (DE); Poisel, Hans, Dr., D-90552 Röthenbach (DE)

(57) **Zusammenfassung**

Die Schutzhülle für einen Monomode-Richtkoppler aus mindestens zwei zu- sowie wegführenden Lichtleitern, die längs einer Koppelstrecke miteinander verschmolzen sind besteht aus mindestens zwei offenen Hüllenteilen, welche zu einer rohrförmigen Hülle verbindbar sind, wobei das Material der Hüllenteile einen gleichen Ausdehnungskoefizienten aufweist wie das lichtleitende Material des Monomode-Richtkopplers. Die Schutzhülle ist mit den zu- bzw. wegführenden Lichtleitern unter Freihaltung der Koppelstrecke des Monomode-Richtkopplers mechanisch fest verbunden gasdicht adgeschlossen, derart, daß bei Temperaturänderungen keine mechanischen Spannungen in der Koppelstrecke auftreten.

## Beschreibung

Die Erfindung betrifft eine Schutzhülle für einen Monomode-Richtkoppler aus mindestens zwei zu- sowie wegführenden Lichtleitern, die längs einer Koppelstrecke miteinander verschmolzen sind.

Schutzhüllen für Faserkoppler sind vielfach bekannt (DE 39 19 263 A1, EP 0 507 243 A1, US 4 822 128) und sollen die im allgemeinen verjüngte Koppelstrecke mechanisch verstärken und damit vor Bruch schützen. Bei der Verwendung von Multimode-Fasern für sog. Sternkoppler ist es sogar möglich, die Schutzhülle direkt mit dem Koppler zu verschmelzen (DE 39 19 263 A1). Für sog. Richtkoppler, die aus Monomode-Fasern hergestellt werden, muß jedoch berücksichtigt werden, daß die eigentliche Koppelstrecke die Schutzhülle nicht berührt und sich auch sonst keine Verunreinigungen aus der Luft auf der Koppelstrecke absetzen, da dies, abgesehen von der prinzipbedingten Phasenverschiebung von 90° zwischen der ein- und auslaufenden Mode, zu weiteren undefinierten Phasenverschiebungen führen würde. Aus diesem Grund werden für Monomode-Richtkoppler Schutzhüllen verwendet, die im wesentlichen die Form einer Rinne haben, welche entweder mit einem Deckel oder mit einer zweiten Hülle (EP 507 243 A1) verschlossen und beidseitig versiegelt werden.

Es hat sich anhand der auf dem Markt befindlichen Monomode-Richtkoppler mit Schutzhülle jedoch gezeigt, daß diese nach wie vor sehr empfindlich auf Temperaturänderungen mit undefinierten Phasenverschiebungen zwischen den ein- und auslaufenden Moden reagieren. Es ist daher Aufgabe der Erfindung, eine Schutzhülle für einen Monomode-Richtkoppler zu schaffen, welche bei Temperaturschwankungen keine Phasenverschiebungen im Richtkoppler verursacht.

Die Lösung dieser Aufgabe gelingt durch eine Schutzhülle gemäß Patentanspruch 1.

Die vorliegende Erfindung geht von der Erkenntnis aus, daß die bisher bekannten Schutzhüllen aufgrund ihrer Unsymmetrie bei Temperaturänderungen geringe Verbiegungen quer zur Längsrichtung durchführen, wobei sich diese Verbiegung über die mit der Schutzhülle mechanisch fest verbundenen Lichtleiterenden auf die Koppelstrecke auswirkt. Bei Verwendung unterschiedlicher Materialien für die Schutzhülle und die Lichtleitfasern bzw. den Richtkoppler, können zusätzlich noch Zug- oder Druckspannungen auf die Koppelstrecke hinzukommen. Diese Einflüsse verursachen erhebliche Phasenverschiebungen beim Durchlauf der Moden. Die erfindungsgemäß vorgesehene Schutzhülle behebt nun dieses Problem dadurch, daß zum einen eine homogene, den Richtkoppler gleichmäßig umgebende rohrförmige Hülle erzeugt wird, in die vorher der Koppler spannungsfrei eingelegt werden kann und deren Material den gleichen Ausdehnungskoeffizient aufweist, wie das lichtleitende Material der für den Koppler verwendeten Lichtleitfasern. Da Monomode-Lichtleiter in der Regel aus Quarzfasern bestehen, bietet sich also auch für die Hülle Quarzglas an.

Besonders vorteilhaft ist es, wenn die Hülle möglichst symmetrisch ist, also auch aus möglichst symmetrischen Hüllenteilen aufgebaut ist. Hierfür bieten sich insbesondere rinnenförmige Hüllenteile an, die im Querschnitt halbkreis-U- oder V-förmig ausgebildet sind.

Damit der Richtkoppler möglichst in der Symmetrieachse der Hülle zu liegen kommt, ist es von besonderem Vorteil, wenn zumindest ein Hüllenteil zwei nach innen gerichtete Sockel als Stütze für die zu- bzw. wegführenden Lichtleiter aufweist, wobei die Sockel einen gegenseitigen Abstand haben, der größer als die Länge der Koppelstrecke ist, damit diese nicht berührt wird.

Insbesondere bei der Verwendung von Glas für die Hüllenteile bietet sich ein Verschweißen der Hüllenteile an. Auch der gasdichte Verschluß kann mit Vorteil durch Aufschmelzen der Hülle im Bereich der Enden geschehen, wobei die Hülle dort auf die Lichtleiter kollabiert und ggf. unter Verwendung eines Glaslotes dort jeweils einen gasdichten Verschluß bildet. Dabei ist es von Vorteil, wenn der Verschluß durch Kollabieren der Hülle nicht am jeweils äußersten Ende, sondern in einem gewissen Abstand davor erfolgt, so daß das Ende als Schutzkragen für die Lichtleiter über den Verschluß hinausragt. In diesen Kragen kann dann eine zusätzliche Dämpfungs- und Verschlußmasse, z.B. Silicon eingefüllt werden.

Zur Erhöhung der Bruch- und Schlagsicherheit kann die Schutzhülle mit einem Metallmantel, z.B. in Form eines Metallröhrchens, in welches die Glashülle eingeschoben wird, umgeben sein.

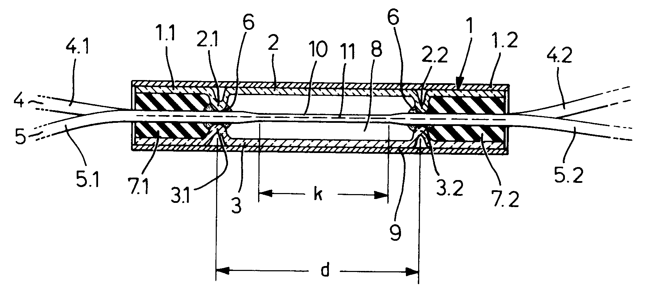

Die Erfindung wird im folgenden anhand des in der Figur teilweise schematisch dargestellten Ausführungsbeispieles näher beschrieben:

Ein aus zwei Monomode-Lichtleitfasern 4 und 5 bestehender Schmelzkoppler, dessen Koppelstrecke 10 eine Länge k aufweist, ist von einer Hülle 1 umgeben, welche aus zwei gleichen, rinnenförmigen Hüllenteilen 2 und 3 zusammengesetzt ist. Die Hüllenteile 2 und 3 bestehen aus dem gleichen Material wie der lichtleitende Teil der Fasern 4 und 5, also z.B. aus Quarzglas. Die beiden Hüllenteile 2 und 3 weisen jeweils nach innen gerichtete Sockel 2.1 und 2.2 bzw. 3.1 und 3.2 auf, deren gegenseitiger Abstand d größer als die Länge k der Koppelstrecke 10 ist. Vor dem Zusammensetzen der Hüllenteile 2 und 3 wird der Richtkoppler in ein Hüllenteil (z.B. 3) so auf die Sockel (z.B. 3.1, 3.2) gelegt, daß die Koppelstrecke 10 keinen der Sockel berührt. Die Höhe der Sockel 2.1, 2.2 bzw. 3.1, 3.2 ist so dimensioniert, daß bei Zusammensetzung der beiden Hüllenteile 2 und 3 zu einer rohrförmigen Hülle 1 zwischen je zwei gegenüberliegenden Sockeln 2.1 und 3.1 bzw. 2.2 und 3.2 noch ausreichend Platz für die zu- bzw. wegführenden Lichtleiter 4.1 und 5.1 bzw. 4.2 und 5.2 bleibt, wobei in diesen Bereichen zusätzlich ein Glaslot 6 eingebracht wird.

Anschließend werden die beiden Hüllenteile 2 und 3 entlang der sich berührenden Seitenränder miteinander verschweißt und weiterhin das Glaslot 6 im Bereich zwischen den Sockeln 2.1 und 3.1 bzw. 2.2 und 3.2 durch Erhitzen zum Schmelzen gebracht. Hierbei ist es von Vorteil, wenn die Hülle 1 an beiden Enden noch einen über die Sockel 2.1, 2.2 bzw. 3.1, 3.2 hinausragenden Kragen 1.1 bzw. 1.2 aufweist, welche die Lichtleiter während der Aufheizphase schützen. Die eigentliche Koppelstrecke 10 des Richtkopplers ist damit luftdicht in der Hülle 1 verschlossen, wobei der abgeschlossene Raum 8 vorher mit eimem Inertgas gefüllt sein kann. Anschließend werden die Innenräume der Krägen 1.1 bzw. 1.2 mit einer zähelastischen Masse ausgegossen, welche jeweils einen Stopfen 7.1 bzw. 7.2 bildet, der die zu- bzw. wegführenden Lichtleiterenden 4.1 und 5.1 bzw. 4.2 und 5.2 umgibt und jeweils eine Art Knickschutz bildet.

Zur Erhöhung der Schlag- und Bruchsicherheit wird die Hülle 1 in ein Metallrohr eingeschoben und darin leicht fixiert.

## Patentansprüche

1. Schutzhülle für einen Monomode-Richtkoppler aus mindestens zwei zu- sowie wegführenden Lichtleitern, die längs einer Koppelstrecke miteinander verschmolzen sind **gekennzeichnet** durch mindestens zwei offene Hüllenteile (2, 3), welche zu einer rohrförmig geschlossenen Hülle (1) verbindbar sind, wobei das Material der Hüllenteile (2, 3) einen gleichen Ausdehnungskoefizienten aufweist wie das lichtleitende Material des Monomode-Richtkopplers sowie **dadurch gekennzeichnet**, daß die Hülle (1) mit den zu- bzw. wegführenden Lichtleitern (4, 5) unter Freihaltung der Koppelstrecke (10) mechanisch fest verbunden und die Koppelstrecke (10) durch die Hülle (1) gasdicht abgeschlossen ist derart, daß bei Temperaturänderungen keine mechanischen Spannungen in der Koppelstrecke (10) auftreten.

2. Schutzhülle nach Anspruch 1 **dadurch gekennzeichnet**, daß die Hüllenteile (2, 3) halbschalenförmig ausgebildet sind.

3. Schutzhülle nach Anspruch 1 oder 2 **dadurch gekennzeichnet**, daß die Hüllenteile (2, 3) die gleiche Form aufweisen.

4. Schutzhülle nach einem der Ansprüche 1 bis 3 **dadurch gekennzeichnet**, daß die Hüllenteile (2, 3) im Querschnitt halbkreis-, U- oder V-förmig ausgebildet sind.

5. Schutzhülle nach einem der Ansprüche 1 bis 4 **dadurch gekennzeichnet**, daß die Hüllenteile (2, 3) miteinander verschweißt sind.

6. Schutzhülle nach einem der Ansprüche 1 bis 5, **dadurch gekennzeichnet**, daß zumindest ein Hüllenteil (2, 3) zwei nach innen gerichtete Sockel (2.1, 2.2; 3.1, 3.2) als Stütze für die zu- bzw. wegführenden Lichtleiter (4.1, 5.1; 4.2, 5.2) aufweist, mit einem gegenseitigen Abstand (d), der größer als die Länge (k) der Koppelstrecke (10) ist.

7. Schutzhülle nach Anspruch 6, **dadurch gekennzeichnet**, daß die Hülle (1) im Bereich der Sockel (2.1, 2.2; 3.1, 3.2) mit den von ihrem äußeren Mantel ("coating") befreiten Lichtleitern (4.1, 5.1; 4.2, 5.2) mechanisch fest verbunden ist.

8. Schutzhülle nach einem der Ansprüche 1 bis 7 **dadurch gekennzeichnet**, daß die Hülle (1) in Abständen vor ihren beiden Enden (1.1, 1.2) durch Aufschmelzen auf die zu- bzw. wegführenden Lichtleiter (4.1, 5.1; 4.2, 5.2) kollabiert ist derart, daß die Enden der Hülle (1) im Querschnitt im wesentlichen unverändert bleiben und jeweils einen Kragen um die Lichtleiter bilden.

9. Schutzhülle nach einem der Ansprüche 1 bis 8 **dadurch gekennzeichnet**, daß zwischen der Hülle (1) und den zu- bzw. wegführenden Lichtleitern (4.1, 5.1; 4.2, 5.2) ein Glaslot (6) angeordnet ist.

10. Schutzhülle nach einem der Ansprüche 1 bis 9 **dadurch gekennzeichnet,** daß die Enden (1.1, 1.2) der Hülle (1) mit einem elastischen Stopfen (7.1, 7.2) versehen sind.

11. Schutzhülle nach einem der Ansprüche 1 bis 10 **dadurch gekennzeichnet,** daß die Hülle (1) von einem metallischen Mantel (9) umgeben ist.

12. Schutzhülle nach einem der Ansprüche 1 bis 11, **dadurch gekennzeichnet**, daß die Koppelstrecke (10) in der Symmetrieachse (11) der Hülle (1) angeordnet ist.
